Europäisches Patentamt

European Patent Office

Office européen des brevets

(19)

(11) Publication number: **0 144 295**
**A2**

(12) # EUROPEAN PATENT APPLICATION

(21) Application number: **84850266.2**

(22) Date of filing: **11.09.84**

(51) Int. Cl.⁴: **B 62 D 33/02**

(30) Priority: **12.09.83 SE 8304867**

(43) Date of publication of application:
**12.06.85 Bulletin 85/24**

(84) Designated Contracting States:
**AT BE CH DE FR GB IT LI NL SE**

(71) Applicant: **AB Kinnegrip**
**Box 683**
**S-531 16 Lidköping(SE)**

(72) Inventor: **Rosén, Göran**
**Radagatan 5**
**S-531 51 Lidköping(SE)**

(74) Representative: **Roth, Ernst Adolf Michael et al,**
**GÖTEBORGS PATENTBYRA AB Box 5005**
**S-402 21 Göteborg(SE)**

(54) A removeable vertical stanchion for vehicle platforms with a support for a tarpaulin cover or the like.

(57) A removeable vertical stanchion (11) for vehicle platforms provided with a support (16) for a tarpaulin cover or the like. The stanchion is pivotally mounted to the platform and lockable thereto and provided with a locking means (12) for locking a sideboard on either side of the stanchion. In order to provide a locking of the support (16) to the stanchion at the same time as this is locked to the sideboards each locking means (12) is provided with a lock bolt (20) each arranged to independently of each other cooperate with a locking member (19) attached to the support (16), more exactly at an elongated portion (17) thereof, which is brought to close contact with the stanchion (11).

EP 0 144 295 A2

./...

# FIG 2

# A REMOVEABLE VERTICAL STANCHION FOR VEHICLE PLATFORMS PROVIDED WITH A SUPPORT FOR A TARPAULIN COVER OR THE LIKE

The present invention refers to a remoevable verticle stanchion for vehicle platforms provided with a support for a tarpaulin cover or the like, said stanchion at its lower end is rotatably mounted to the platform and lockable thereto, and provided with a locking means for locking a sideboard on either side of the stanchion, at the upper end of which the said support is pivotally and detachably arranged, said support being provided with an elongated portion extending from the fulcrum of the support and arranged to be locked in a position in which it is in close contact with the stanchion.

## Background of the invention

On vehicle platforms especially on road trucks the stanchions are used partly to support the sideboards and partly to carry support rods for a tarpaulin cover which covers the platform. The tarpaulin cover is supported by a frame comprising said verticle supports and horizontal longitudinal and transveral transoms. As it is described in the Swedish patent application 328.792 the supports have at the bottom an elongated portion which makes a contact surface against the upper part of the stanchion and which can be locked to the stanchion by means of a sideboard, a screw of the like.

## The object and most important features of the invention

The object of the present inventon is to provide a device of the above mentioned kind, by which the support is locked to the stanchion at the same time as it is locked to the sideboards. The locking means of one of the sideboards should be releasable without releasing the locking of the support. This has according to the invention been solved by the fact that each locking means is provided with a lock bolt attached to the lock cylinder of the respective locking means and that the lock bolts independently of each other are arranged to cooperate with at least one locking member arranged at the elongated portion of the support.

## Description of the drawings

The invention will now be described further with reference to an embodiment shown in the accompanying drawings.

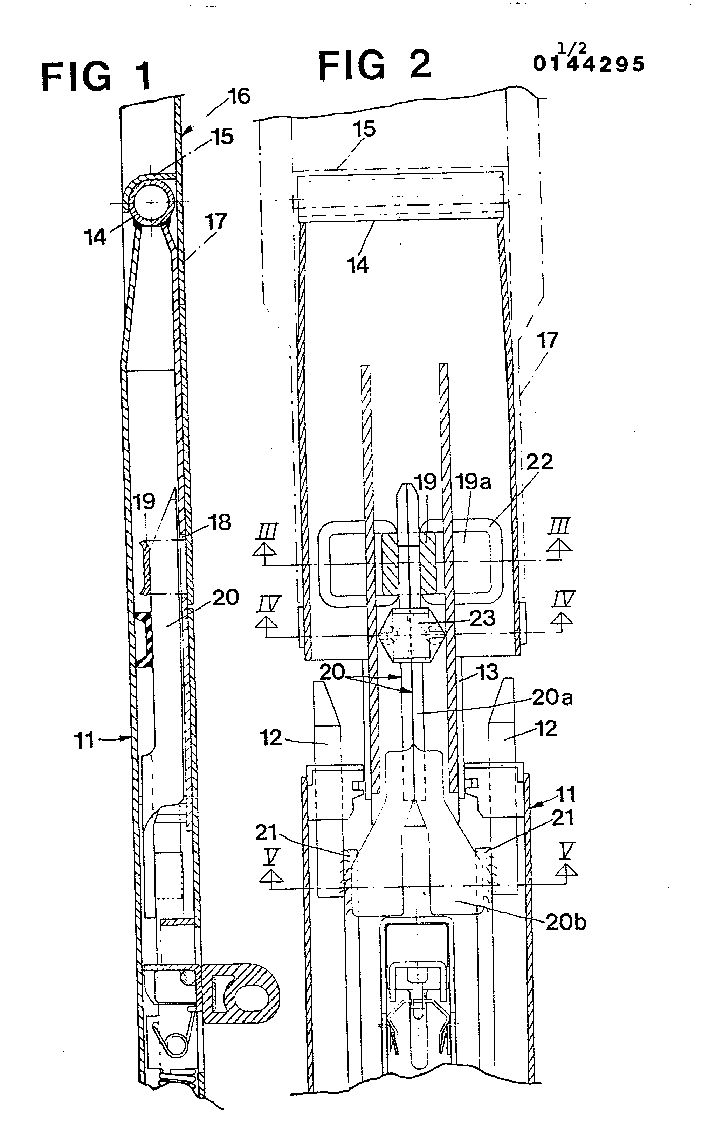

Fig. 1 is a vertical section through the upper part of a stanchion connected with a support indicated with dash-dotted lines,

Fig. 2 shows the same detail from the front,

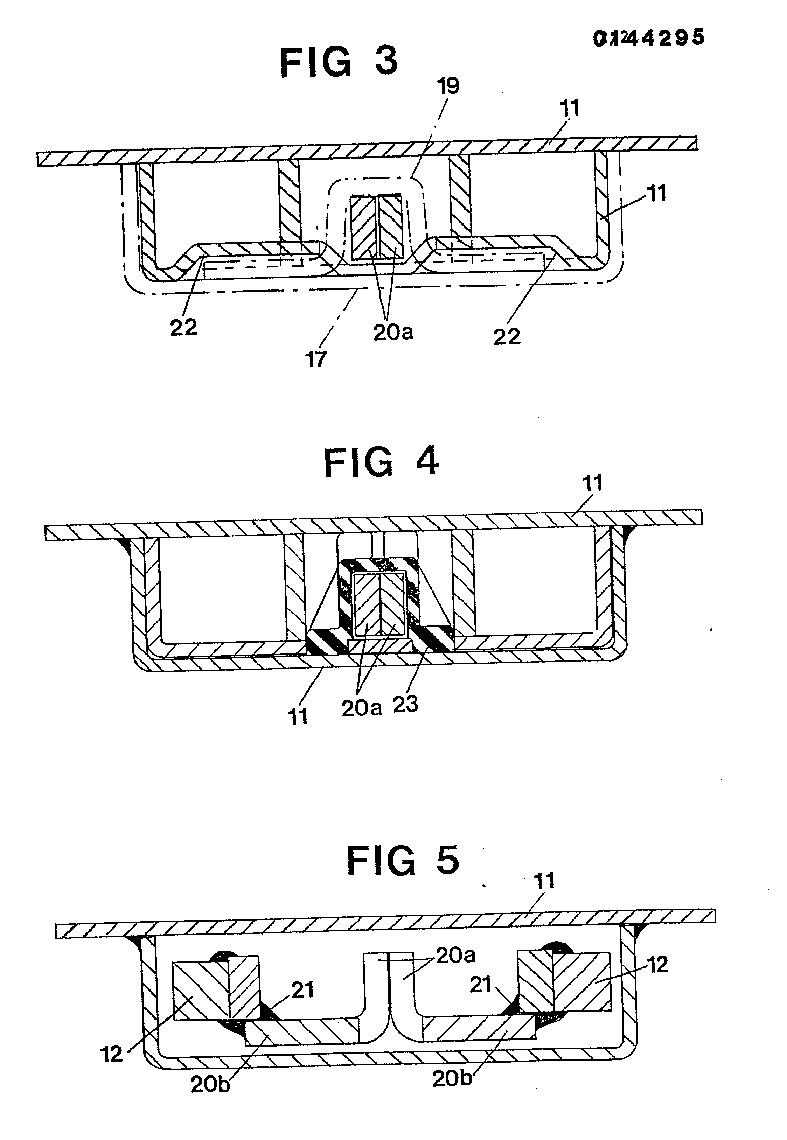

Fig. 3 is a section according to the line III-III in fig. 2,

Fig. 4 is a section according to the line IV-IV in fig. 2, and

Fig. 5 is a section according to the line V-V in fig.2.

## Description of embodiments

In the drawings the reference numeral 11 denotes a stanchion, the lower end of which is rotatably mounted to the side edge of a vehicle platform and which by means of a pair of operating arms (not shown) at the lower part of the stanchion are lockable thereto.

Locking means 12 arranged in the stanchion 11 and which connect the stanchion with a sideboard on either side (not shown) are operated by the same operating arms. Each locking means 12 consists of a vertically displaceable lock bolt which in locking position is inserted into a locking loop (not shown) attached to the respective sideboard.

The stanchion 10 has an upper part which at the top is provided with a bearing journal 14 in the form of a tubular axle and which cooperates with a groove-shaped bearing cup 15 for a tarpaulin cover support 16 arranged on the top of the stanchion. This is in a known manner provided with an elongated portion 17 which makes the contact surface against the front side of the stanchion. The elongated portion 17 of the support 16 is provided with a locking shackle 19 extending into an opening 18 in the stanchion 11. The shackle 19 has a pair of side flanges 19a, which are intended to rest in recesses 22 in the front side of the stanchion 11 in connection to the opening 18. The shackle 19 is intended to cooperate with a pair of lock bolts 20 attached to the lock cylinder 12 of the locking means. The support 16 is by that locked to the stanchion 11 at the same time as this is locked to the sideboards. By the fact that the lock cylinder 12 of the locking means is connected with a lock bolt 20 each the locking means can be disengaged from one of the sideboards without releasing the locking of the support 16.

The lock bolts 20 are bent by a relatively thick sheet billet and has plane extended portions 20a, which make the lock bolts and wider portions 20b bent perpendicularly thereto, to which weld joints 21 to the lock bolts 12 of the locking means are attached. The portions 20a are in close contact and are guided against each other along their whole length. They are arranged to cooperate at their upper part with the locking shackle 19 attached at the extended portion 17 of the support, and just below this a guide 23 of plastic or another low friction material for the lock bolts 20 is arranged. The movement of the lock bolts is well guided by the guide 23 and by the opposite lock bolt.

The invention is of course not limited to the embodiment shown in the drawings but many variations are possible within the scope of the claims . For example it is possible to provide only one of the lock bolts 12 of the locking means with a lock bolt 20, by which it is however not possible to disengage the lock cylinder without the locking of the support 16 being released.

0144295

CLAIMS

1. A removeable verticle stanchion (10) for vehicle platforms provided with a support (16) for a tarpaulin cover or the like, said stanchion at its lower end is rotatably mounted to the platform and lockable thereto and provided with a locking means (12) for locking a sideboard on either side of the stanchion, at the upper end of which the said support (16) is pivotally and detachably arranged, said support being provided with an elongated portion (17) extending from the fulcrum of the support and arranged to be locked in a position in which it is in close contact with the stanchion, c h a r a c t e r i z e d  i n, that each locking means (12) is provided with a lock bolt (20) attached to the lock cylinder (12) of the respective locking means and that the lock bolts (20) independently of each other are arranged to cooperate with at least one locking member (19) arranged at the elongated portion (17) of the support.

2. A device according to claim 1, c h a r a c t e r i z e d  i n, that each lock bolt (20) comprises an extended portion (20a) intended to cooperate with said locking member (19) and which portion is arranged to with substantially its entire length be in close contact with a corresponding contact surface of the extended portion (20a) of the opposite lock bolt (20).

3. A device according to claim 2, c h a r a c t e r i z e d  i n, that the extended portions (20a) of the lock bolts (20) are arranged to extend through a guide (23) of a low-friction material attached to the stanchion (11).

4. A device according to claim 2 or 3, that each lock bolt (20) comprises a wider portion (20b) which is bent substantially perpendicularly to the extended portion (20a) and which is attached to the respective locking means (12)

FIG 1    FIG 2    1/2
0144295

# FIG 3

# FIG 4

# FIG 5